# EUROPEAN PATENT APPLICATION

(11) **EP 3 096 225 A1**
(43) Date of publication of application: **23.11.2016**
(21) Application number: 16167770.3
(22) Date of filing: 29.04.2016
(51) Int. Cl.: G06F 9/455, G06F 9/445

(54) **METHODS AND SYSTEMS FOR VIRTUALIZATION OF PORTABLE ELECTRONIC DEVICES**

(30) Priority: 20.05.2015 US 201514717519
(71) Applicant: BlackBerry Limited, Waterloo, ON N2K 0A7 (CA)
(72) Inventor: VANDEWEERD, Sean, Mississauga, Ontario L4W 5P1 (CA); NATHWANI, Sanjay, Mississauga, Ontario L4W 5P1 (CA); LAROCK, Jason Phillip Peter, Kanata, Ontario K2K 3K1 (CA)
(74) Representative: Moore, Barry

(57) **Abstract**

A method for configuring an electronic device comprises receiving an order for a new electronic device from a user, receiving account information for a server account for the user emulating the new electronic device on a server to generate a virtual electronic device, associating the virtual electronic device with the server account, providing access to the virtual electronic device through the server account, configuring the virtual electronic device based on user interaction with the virtual electronic device through the server account, receiving an activation signal from the new electronic device; and applying a configuration of the virtual electronic device to the new electronic device.

## Description

### FIELD OF TECHNOLOGY

The present disclosure relates to portable electronic devices.

### BACKGROUND

Portable electronic devices have gained widespread use and may provide a variety of functions including, for example, telephonic, electronic messaging and other personal information manager (PIM) application functions. Portable electronic devices include several types of devices including mobile stations such as simple cellular telephones, smart telephones, wireless PDAs, and laptop computers with wireless 802.11 or Bluetooth^{®} capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed.

Improvements in virtualization of portable electronic devices are desirable.

### SUMMARY

Accordingly there is provided methods, computer readable medium, a server and a portable electronic device as detailed in the claims that follow.

### BRIEF DESCRIPTION OF THE DRAWINGS

Embodiments of the present disclosure will now be described, by way of example only, with reference to the attached figures, in which:
FIG. 1 is a block diagram of a portable electronic device in accordance with the present disclosure;
FIG. 2 shows an example system for configuring electronic devices in accordance with the disclosure;
FIG. 3 is a flowchart illustrating an example method for configuring an electronic device in accordance with the present disclosure;
FIG. 4 is a flowchart illustrating another example method for configuring an electronic device in accordance with the present disclosure.

### DETAILED DESCRIPTION

For simplicity and clarity of illustration, reference numerals may be repeated among the figures to indicate corresponding or analogous elements. Numerous details are set forth to provide an understanding of the examples described herein. The examples may be practiced without these details. In other instances, well-known methods, procedures, and components are not described in detail to avoid obscuring the examples described. The description is not to be considered as limited to the scope of the examples described herein.

The disclosure generally relates to an electronic device, such as a portable electronic device, as described herein. Examples of portable electronic devices include mobile, or handheld, wireless communication devices such as cellular phones, cellular smart-phones, wireless organizers, personal digital assistants, wirelessly enabled notebook computers, tablet computers, mobile internet devices, electronic navigation devices, and so forth.

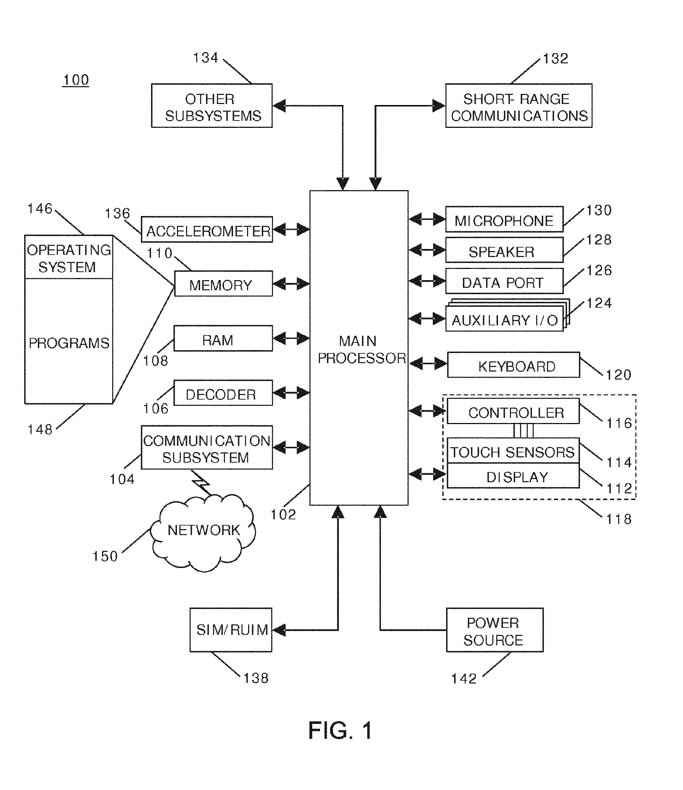

A block diagram of an example of an electronic device 100, which in the present example is a portable electronic device, is shown in FIG. 1. The electronic device 100 includes multiple components, such as a processor 102 that controls the overall operation of the electronic device 100. Communication functions, including data and voice communications, are performed through a communication subsystem 104. Data received by the electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the electronic device 100.

The processor 102 interacts with other components, such as a Random Access Memory (RAM) 108, memory 110, a touch-sensitive display 118, a keyboard 120, an auxiliary input/output (I/O) subsystem 124, a data port 126, a speaker 128, a microphone 130, short-range communications 132 and other device subsystems 134. The speaker 128, also referred to as an earpiece speaker, is utilized to output audible signals when a user's ear is very close to the speaker 128. Although not shown, the processor may also interact with a loudspeaker, for example, for handsfree use. The keyboard 120 includes a plurality of generally transparent keycaps and a flexible display disposed under the keycaps for displaying characters such as alphabetical characters, numeric characters, punctuation, or symbols. The keyboard 120 is further described herein below.

The touch-sensitive display 118 includes a display 112 and touch sensors 114 that are coupled to at least one controller 116 that is utilized to interact with the processor 102. Input via a graphical user interface is provided via the touch-sensitive display 118 and the keyboard 120. Information, such as text, characters, symbols, images, icons, and other items that may be displayed or rendered on a portable electronic device, is displayed on the touch-sensitive display 118 via the processor 102. The processor 102 may also interact with an accelerometer 136 that may be utilized to detect direction of gravitational forces or gravity-induced reaction forces.

To identify a subscriber for network access, the electronic device 100 may utilize a Subscriber Identity Module or a Removable User Identity Module (SIM/RUIM) card 138 for communication with a network, such as the wireless network 150. Alternatively, user identification information may be programmed into memory 110.

The electronic device 100 includes an operating system 146 and software programs, applications, or components 148 that are executed by the processor 102 and are typically stored in a persistent, updatable store such as the memory 110. Additional applications or programs may be loaded onto the electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive touch-sensitive display that includes a plurality of capacitive touch sensors 114. Capacitive touch sensors 114 include drive electrodes, also known as transmission electrodes, and sense electrodes, also known as receive electrodes. The drive electrodes generally extend in one direction and cross over or under the sense electrodes, which generally extend in another direction, generally at right angles to the direction that the drive electrodes extend, to form a grid pattern. The drive electrodes are spaced from the sense electrodes by a dielectric material. The points at which the drive electrodes and the sense electrodes cross each other are referred to as nodes. The drive and sense electrodes may comprise any suitable material, such as indium tin oxide (ITO).

One or more touches, also known as touch contacts or touch events, may be detected by the touch-sensitive display 118. The processor 102 may determine attributes of the touch, including a location of the touch. Touch location data may include data for an area of contact or data for a single point of contact, such as a point at or near a center of the area of contact. The location of a detected touch may include x and y components, e.g., horizontal and vertical components, respectively, with respect to one's view of the touch-sensitive display 118. A touch may be detected from any suitable input member, such as a finger, thumb, appendage, or other objects, for example, a stylus, pen, or other pointer, depending on the nature of the touch-sensitive display 118. Multiple simultaneous touches may be detected.

By repeatedly scanning the electrodes of the touch-sensitive display 118 to detect touches, movement of a touch relative to the touch-sensitive display 118 may be detected. One or more gestures may also be detected by the touch-sensitive display 118. A gesture, such as a swipe, also known as a flick, is a particular type of touch on a touch-sensitive display 118 and may begin at an origin point and continue to an end point, for example, a concluding end of the gesture. A gesture may be identified by attributes of the gesture, including the origin point, the end point, the distance travelled, the duration, the velocity, and the direction, for example. A gesture may be long or short in distance and/or duration. Two points of the gesture may be utilized to determine a direction of the gesture. A gesture may also include a hover. A hover may be a touch at a location that is generally unchanged over a period of time or is associated with the same selection item for a period of time.

The touch-sensitive display 118 includes a display area in which information may be displayed, and a non-display area extending around the periphery of the display area. Information is not displayed in the non-display area by the display. The non-display area is utilized to accommodate, for example, electronic traces or electrical connections, adhesives or other sealants, and/or protective coatings around the edges of the display area. The non-display area may be referred to as an inactive area and is not part of the physical housing or frame of the electronic device. Typically, no pixels of the display are in the non-display area, thus no image can be displayed by the display 112 in the non-display area. Optionally, a secondary display, not part of the primary display 112, may be disposed in the non-display area. Touch sensors including drive electrodes and sense electrodes may be disposed in the non-display area, which touch sensors may be extended from the touch sensors in the display area or may be distinct or separate touch sensors from the touch sensors in the display area. A touch, including a gesture, may be associated with, i.e., performed on, the display area, the non-display area, or both areas. The touch sensors including the drive electrodes and the sense electrodes may extend across substantially the entire non-display area or may be disposed in only part of the non-display area.

As technology capabilities and requirements evolve, users periodically transition to new electronic devices. A user can spend a lot of effort becoming familiar with a new device or technology, and in configuring the new device according to personal preferences. Further, when a user receives a new electronic device, the device must go through a setup process, which may be complicated or frustrating for the user to complete alone. Often device setup is done at a retail location where the new device is purchased, which requires information gathering and processing in a possibly uncomfortable environment and/or possibly at an inconvenient time. Device setup at a retail location also requires detailed training for store employees on the new device to provide direct support to the first-time user. The present disclosure provides methods and systems for facilitating ordering, setup and configuration of new electronic devices.

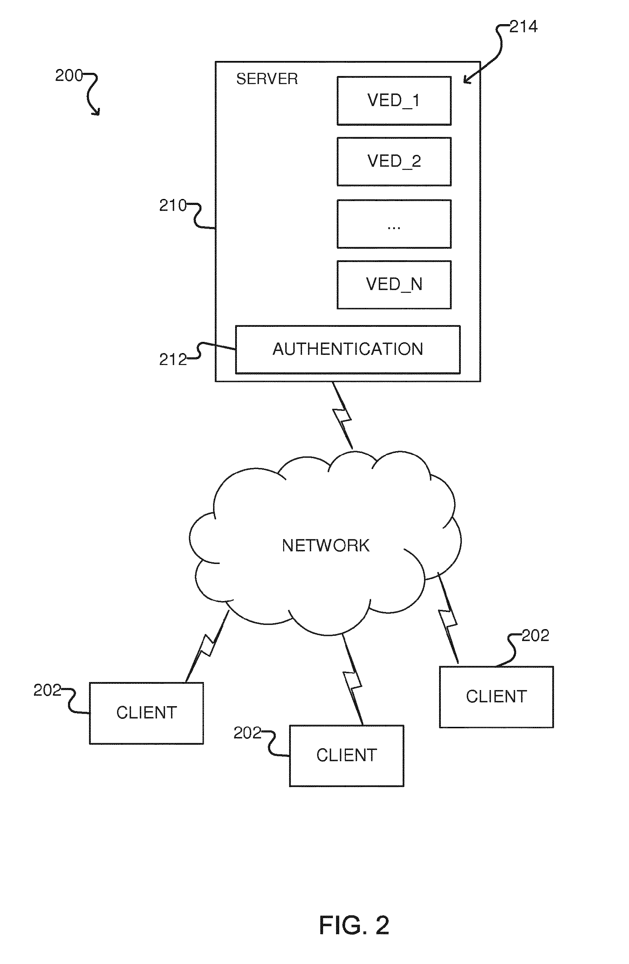

FIG. 2 shows an example system 200 by which new electronic devices may be configured prior to delivery to users. The system 200 comprises a server 210 which can communicate with a plurality of client devices 202 over a network. The client devices 202 may include a variety of different types of devices, such as for example smartphones, tablets, laptop computers, desktop computers, and the like. The server 210 comprises one or more processors and memory elements (not shown), an authentication subsystem 212, and a plurality of virtual electronic devices (VEDs) 214. The authentication subsystem 212 may, for example, comprise a single sign on (SSO) authentication system, or other type of general access protocol. As discussed below, users ordering new electronic devices may utilize existing server accounts and/or are provided with new server accounts and corresponding authentication data such that a user can use a client device 202 to interact with one of the VEDs 214 corresponding to an ordered electronic device.

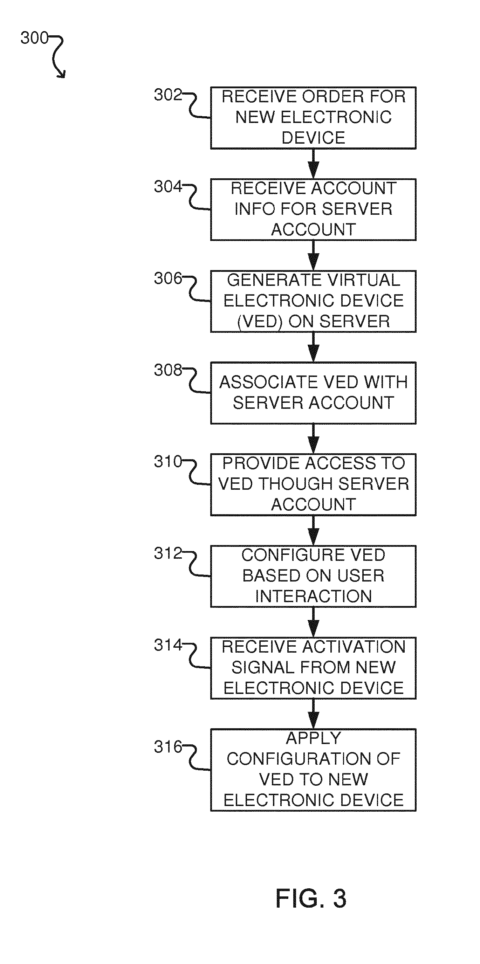

A flowchart illustrating an example method 300 of configuring an electronic device is shown in FIG. 3. The method may be carried out by software executed, for example, by one or more processors running on the server 210 of FIG. 2. Coding of software for carrying out such a method is within the scope of a person of ordinary skill in the art given the present description. The method may contain additional or fewer processes than shown and/or described, and may be performed in a different order. Computer-readable code executable by at least one processor of the server 210 to perform the method may be stored in a computer-readable storage medium, such as a non-transitory computer-readable medium.

An order for a new electronic device is received from a user at 302. The order may be received either directly from the user (e.g. through a client device 202), from a retail outlet visited by the user, or in any other manner. Account information for a server account is received at 304. The account information may include, for example, a username, password, and optionally other user-specific information such as address information, payment information, shipping information, etc. If a user has an existing account, information for the existing account may be received at 304. If a user does not have an existing account, a new server account for the user may be generated at 304. Authentication data for the server account may also be provided to the user at 304, unless the user already has the authentication data (e.g. if the user has an existing account.

A virtual electronic device (VED) corresponding to the ordered new electronic device is generated on a server at 306. Generating the VED may, for example comprise generating a VED based on a template corresponding to the ordered new device. In some embodiments, generating the VED may comprise associating a unique identifier for the ordered new device with the VED. The VED is associated with the user's server account at 308.

Access to the VED on the server is provided to the user at 310. The user accesses the VED at 310 using their server account to log on to the server, for example through an SSO or other authentication subsystem.

The VED is configured at 312 based on user interaction with the VED. User interaction at 312 may comprise, for example, entering user information such as contacts, calendars, etc., activating personal information management (PIM) accounts, installing applications, adjusting settings, migrating configuration(s) and/or data from other devices, and other interactions that adjust the configuration of the VED.

An activation signal from the new electronic device is received at 314. The activation signal may, for example, be sent when the user receives the new electronic device and signs into the new device. In some embodiments, the activation signal may be sent automatically when the user signs in to the new electronic device. In some embodiments, the activation signal may be sent once initiated through an application running on the new electronic device. In some embodiments, the activation signal may be accompanied by a unique identifier for the new electronic device.

In response to the activation signal, the configuration of the VED is applied to the new electronic device at 316. Applying the configuration of the VED to the new electronic device may, for example, comprise placing the new electronic device in the same state as the VED was in the last time the user interacted with the VED on the server through the user's server account.

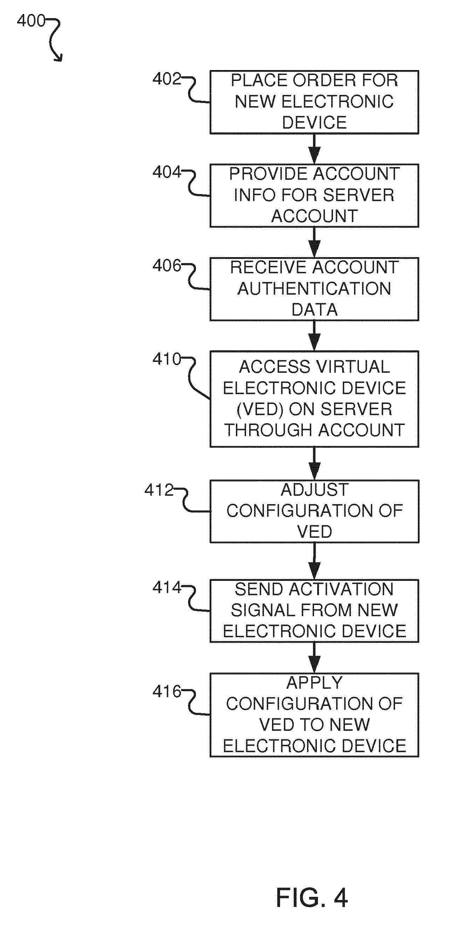

A flowchart illustrating another example method 400 of configuring an electronic device is shown in FIG. 4. An order for a new electronic device is placed by a user at 402. The order may be received either directly by the user (e.g. through a client device 202), from a retail outlet visited by the user, or in any other manner. Account information for a server account for the user is provided at 404. The account information may include, for example, a username, password, and optionally other user-specific information such as address information, payment information, shipping information, etc. Authentication data for the server account is received by the user at 406, unless the server account is an existing account for which the user already has authentication data.

A VED on a server corresponding to the ordered new electronic device is accessed by the user at 410. The user accesses the VED at 410 using their server account to log on to the server, for example through an authentication subsystem.

Configuration of the VED is adjusted at 412 based on user interaction with the VED. User interaction at 412 may comprise, for example, entering user information such as contacts, calendars, etc., activating personal information management (PIM) accounts, installing applications, adjusting settings, migrating configuration(s) and/or data from other devices, and other interactions that adjust the configuration of the VED.

An activation signal from the new electronic device is sent at 414. The activation signal may, for example, be sent when the user receives the new electronic device and signs into the new electronic device. In some embodiments, the activation signal may be sent automatically when the user signs in to the new electronic device. In some embodiments, the activation signal may be sent once initiated through an application running on the new electronic device. In some embodiments, the activation signal may be accompanied by a unique identifier for the new electronic device.

In response to the activation signal, the configuration of the VED is applied to the new electronic device at 41 6. Applying the configuration of the VED to the new electronic device may, for example, comprise placing the new electronic device in the same state as the VED was in the last time the user interacted with the VED on the server through the user's server account.

Advantageously, systems and methods according to the present disclosure facilitate the process of setting up a new electronic device, for example by: applying settings to the electronic device so it is set up and personalized for first use; providing virtualization of the device to enable the user to engage in early learning, familiarization and tutorials; and/or enabling usage on other devices (e.g., computers, tablets, smartphones, smart TVs, etc.) via integration software such as, for example, BlackBerry Blend. Systems and methods according to the present disclosure thus ease the process of replacing or upgrading a user's electronic device.

The scope of the claims should not be limited by the preferred embodiments set forth in the examples, but should be given the broadest interpretation consistent with the description as a whole.

## Claims

1. A method comprising:
receiving an order for a new electronic device from a user;
receiving account information for a server account for the user;
emulating the new electronic device on a server to generate a virtual electronic device;
associating the virtual electronic device with the server account;
providing access to the virtual electronic device through the server account;
configuring the virtual electronic device based on user interaction with the virtual electronic device through the server account;
receiving an activation signal from the new electronic device; and
applying a configuration of the virtual electronic device to the new electronic device.

2. The method of claim 1 wherein receiving account information comprises receiving account information for an existing server account for the user.

3. The method of claim 1 or 2 wherein receiving account information comprises generating a new server account for the user and providing authentication data for the new server account to the user.

4. The method of any preceding claim wherein the server account comprises a single sign on account.

5. The method of any preceding claim wherein receiving the activation signal comprises receiving a unique identifier for the new electronic device.

6. The method of any preceding claim wherein emulating the new electronic device on the server to generate the virtual electronic device comprises associating a unique identifier for the new electronic device with the virtual electronic device.

7. A method comprising:
placing an order for a new electronic device;
providing account information for a server account;
accessing a virtual electronic device on a server through the server account, the virtual electronic device corresponding to the new electronic device;
interacting with the virtual electronic device through the server account to adjust a configuration of the virtual electronic device;
sending an activation signal from the new electronic device; and
applying the configuration of the virtual electronic device to the new electronic device.

8. The method of claim 7 wherein providing account information comprises providing account information for an existing server account for the user.

9. The method of claim 7 or 8 wherein providing account information comprises providing information to generate a new server account for the user and receiving authentication data for the new server account.

10. The method of any one of claims 7 to 9 wherein the server account comprises a single sign on account.

11. The method of any one of claims 7 to 10 wherein sending the activation signal comprises sending a unique identifier for the new electronic device.

12. A computer-readable medium having computer-readable code stored thereon, the computer-readable code executable by at least one processor of a portable electronic device to perform the method according to any one of claims 1 to 6.

13. A computer-readable medium having computer-readable code stored thereon, the computer-readable code executable by at least one processor of a server to perform the method according to any one of claims 7 to 11.

14. A server comprising software executable on a processor of the server carry out the method of any one of claims 7 to 11.

15. A portable electronic device comprising software executable on a processor of the portable electronic device to carry out the method of any one of claims 1 to 6.
